# EUROPEAN PATENT APPLICATION

(11) **EP 4 804 019 A1**
(43) Date of publication of application: **09.09.2026**
(21) Application number: 26162058.7
(22) Date of filing: 03.03.2026
(51) Int. Cl.: G06F 8/77, G06F 11/3604, G06F 21/57

(54) **SOFTWARE PACKAGE REVIEW WITH ML AND AI**

(30) Priority: 03.03.2025 US 202519069045
(71) Applicant: CrowdStrike Inc., Sunnyvale, CA 94086 (US)
(72) Inventor: BALLES, Christopher, Sunnyvale, 94086 (US); MADDEN, Julianna, Sunnyvale, 94086 (US); DUONG, Quoc, Sunnyvale, 94086 (US); COSMADELIS, Michael, Sunnyvale, 94086 (US); ZEPF, Joshua, Sunnyvale, 94086 (US); RIVES, Katherine, Sunnyvale, 94086 (US)
(74) Representative: Murgitroyd & Company

(57) **Abstract**

Computing device(s) described herein evaluate a software package and its associated metadata with one or more supervised machine learning (ML) models and an artificial intelligence (AI) component. The computing device(s) receive the software package and retrieve metadata associated with it, the metadata including at least a commit history. Based on the evaluating, the computing device(s) calculate a score for the software package. The score indicates a code base inclusion status for the software package.

## Description

### BACKGROUND

In coding and building new software, developers often rely on existing components developed by others. Developers often choose these components with great care, ensuring that the components come from a reputable source - both the site of storage and the initial developers of the components. Sites providing these components often allow users to rate them, rate those developing them, etc., and this too might be considered by developers. Even when care is taken, however, reliance on third-party components adds to the level of risk that the software being developed is compromised. The third-party component may be or include malicious code (malware) or spyware. And even if not intentionally malicious, the third-party component could have flaws that could cause the software using it to crash, run slowly, etc.

When new software packages are introduced to a system, the operator of that system may decide to evaluate the software packages for indications of malicious activity, code flaws, vulnerabilities, performance issues, etc., before allowing the software packages to become an integrated part of the code base of the system. Even when the operator employs a sizeable team to review and test the new software packages, the number of packages introduced may be such that the scale of the review could be improved.

### SUMMARY

Accordingly there is provided a method, a system, and a computer program as detailed in the claims that follow.

### BRIEF DESCRIPTION OF THE DRAWINGS

The detailed description is set forth with reference to the accompanying figures. In the figures, the left-most digit(s) of a reference number identifies the figure in which the reference number first appears. The use of the same reference numbers in different figures indicates similar or identical items or features.
FIG. 1 shows example devices and components in a network architecture, the devices and components including software packages, a supervised machine learning (ML) model, an artificial intelligence (AI) component, and an evaluator configured to utilize the supervised ML model and AI component to score the software packages for inclusion in a code base.
FIG. 2 shows components of FIG. 1 in greater detail, including package metadata associated with a software package that is used along with the supervised ML model and AI component to evaluate the software package.
FIG. 3 shows a flowchart of an example process for evaluating a software package using a supervised ML model and an AI component.
FIG. 4 shows a flowchart of an example process for training a supervised ML model for use in evaluating software packages in conjunction with an AI component.
FIG. 5 shows an example system architecture for a computing device that uses a supervised ML mode and AI component to evaluate a software package.

### DETAILED DESCRIPTION

This disclosure is directed in part to evaluating software packages and their associated metadata with one or more supervised machine learning (ML) models and an artificial intelligence (AI) component. The computing device(s) receiving the software packages may retrieve metadata associated with them. Based on the evaluating, the computing device(s) may calculate scores indicating code base inclusion statuses for the software packages. The code base inclusion statuses may indicate whether the software packages should be excluded from a code base, allowed as part of the code base, or provided to human analyst for further review.

In some examples, software packages may be code associated with a third-party system, such as a code repository, third-party developer, or both. GitHub^{™} is an example of such a code repository. The code repository may provide information about a software package - hereinafter "package information" - information about a person or entity that developed or maintained it - hereinafter "maintainer information" - other information, or some combination of such information. This package information, maintainer information, and other information is referred to herein as "package metadata" (or simply as "metadata") as it describes what is known about a software package outside of its own code. While the metadata may be retrieved from a code repository, it may also be retrieved from any number of other sources, such as publicly available web content (documents, images, videos, executables, etc.), social media content, etc.

In various implementations, monitor components, hooks, etc. distributed through a code base or network into which a software package is introduced may detect the new software package at the time of its introduction or soon thereafter. Alternatively or additionally, the software package may be detected using a scan of the code base/network either periodically or on an event driven basis.

Once a software package has been detected, one or more computing devices associated with the code base/network may retrieve the metadata for the software package and evaluate the software package using a supervised ML and an AI component. In one example, the AI component may be a generative AI component and may scan the software package for vulnerabilities and provide results of the scan to the supervised ML model for use alongside the software package and metadata. The supervised ML model may receive the software package, its metadata, and results of the AI component as inputs and, based on those inputs, generate at least one score. In some examples, the supervised ML model may calculate scores for multiple different categories - e.g., power consumption, execution time, etc. that may be used in different circumstances. In other examples, the supervised ML model may calculate only a single score.

In various implementations, the one or more computing devices may use the score or scores to indicate a code base inclusion status. The code base inclusion status may indicate that the software package is excluded from the code base/network, that the software package is allowed in the code base/network, or that the software package is to be sent to a human analyst for further evaluation. In some examples, the computing device(s) may allow a developer to submit a software package for scoring (e.g., through a user interface (UI)) and provide the developer with the resulting score.

The one or more computing devices (or other devices) may also create and update the supervised ML model. The supervised ML model may be built based on labeled and scored training data (e.g., labeled and scored software packages and package metadata). In some examples, the training data may be labeled and scored by an AI component, a human analyst, or both. Results of human analyst evaluation after scoring of a software package may also be provided back to the supervised ML model to update the supervised ML model. For example, if the human analyst indicates that a software package should be excluded, similarity to the software package and its metadata of a future software package may now result in a lower score for that future software package.

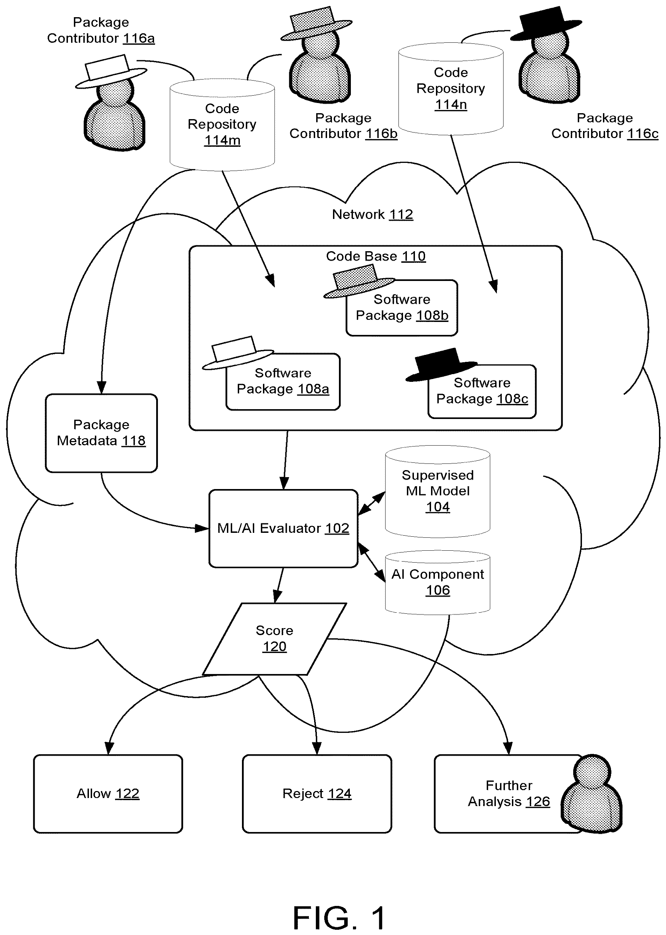

FIG. 1 shows example devices and components in a network architecture, the devices and components including software packages, a supervised machine learning (ML) model, an artificial intelligence (AI) component, and an evaluator configured to utilize the supervised ML model and AI component to score the software packages for inclusion in a code base. As illustrated, a ML/AI evaluator 102 ("evaluator 102") may utilize a supervised ML model 104 and AI component 106 to evaluate software packages 108 (e.g., software package 108a, software package 108b, and software package 108c) that have been added to a code base 110 of a network 112. The software packages 108 may each be associated with a code repository 114 (e.g., code repository 114m or code repository 114n) and with a package contributor 116 (e.g., package contributor 116a, package contributor 116b, or package contributor 116c). The evaluator 102 or a related component, after receiving/taking note of a software package 108, may retrieve the package metadata 118 ("metadata 118") of that software package 108. The evaluator 102 evaluates the software package 108 based at least on its metadata 118 and using the supervised ML model 104 and AI component 106. Based on the evaluation, the evaluator 102 calculates a score 120 for the software package 108. Based on the score 120, the software package 108 is either allowed 122 in the code base 110, rejected 124 from the code base 110, or sent for further analysis 126 to a human analyst.

FIG. 1 also includes grayscale-colored hats for the software packages 108 and package contributors, with a black hat indicating a bad actor and bad software package, a white hat indicating a good actor and a good software package, and a gray hat indicating an actor and a package of unknown status. This use of gray hats may differ from some uses of "gray hat" in technology fields.

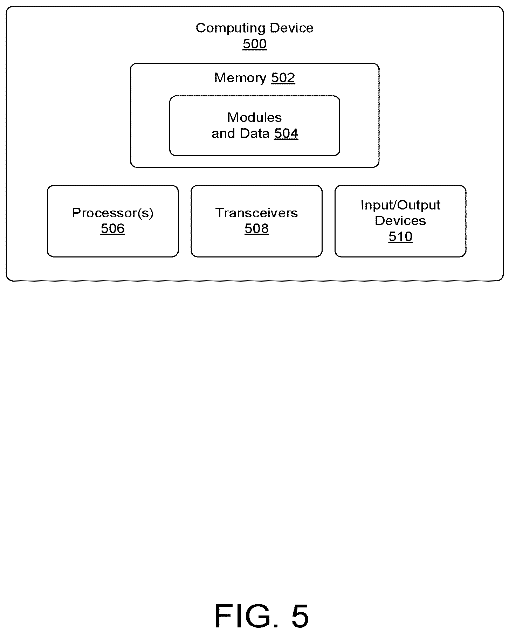

No computing device is explicitly illustrated in FIG. 1. It is to be understood, however, that components such as the evaluator 102, supervised ML model 104, AI component 106, and code base 110 may be implemented by one or more computing devices of the network 112. The software packages 108 and metadata 118 may reside on the same one or more computing devices or other devices. The code repositories 114 may also be located on computing device(s) that may or may not be a part of network 112. The one or more computing device(s) of the network 112 that implement the evaluator 102, supervised ML model 104, AI component 106, and code base 110 may be physical computing device(s) or a virtual computing device(s) (also referred to herein as "virtual machines"). For example, the one or more computing device(s) may each be a computer, a workstation, a mobile computing device, an Internet of Things (IoT) device, a server, a cloud computing resource, a virtual computing element such as a container, a network element such as a gateway or a firewall, and/or any other type of computing device or computing system. An example computing device capable of serving as one of the one or more computing device(s) of network 112 is illustrated in FIG. 5 and described further herein with reference to that figure.

The network 112 may be any sort of public or private network. In some implementations, the network 112 may be an internal network of an entity developing a code base 110 and may connect devices of developers associated with the entity through their devices with other devices of the entity, such as server computers, storage systems, client devices, etc. The various devices of the network 112 may be connected by wired mechanisms, wireless mechanisms, or both. The network 112 may also allow access to an external network, such as the Internet, through gateway or firewall devices that provide access controls for incoming connections.

In various implementations, the entity operating the network 112 may be any sort of entity - a business, government, an education institution, etc. In some examples, the entity may be a cybersecurity service operator. In such examples, the code base 110 may include a cloud-based service, an endpoint client, tools or other components, etc.

As noted, developers associated with the entity may contribute components to the code base 110, and such components may include software packages 108 taken from third-party systems, such as code repositories 114. These code repositories 114 - e.g., GitHub^{™} - may contain software packages 108 commonly used by developers for specific functions. Such software packages 108 may be accompanied by ratings, reviews, and indications of developers, contributors, owners - such as package contributors 116 - who may themselves have ratings and reviews. This information may comprise package metadata 118 for the software packages 108. The code repositories 114 then include storage of software packages 108 and information about the stored software packages and those that contribute to them. Such storage may include cloud storage, database system(s), etc. and may be accompanied by an application or web service interface which enables developers to add software packages 108, modify software packages 108, retrieve software packages 108, and read and write information about software packages through, e.g., reviews and ratings.

In various implementations, the software packages 108 may comprise any sort of module or component in executable, compiled, or uncompiled state performing one or more functions, offering one or more services, etc. The code of a software package 108 can include non-executable comments that may serve as part of the metadata 118. In some examples, a software package 108 may go through multiple versions, with different package contributors 116 contributing to different ones of the versions. In further examples, the code repository 114 that includes the software package 108 may provide transparency about the different versions and their contributors 116.

The package contributors 116 can be a person, a group of people, or a program (e.g., an AI). Package contributors 116 can be malicious, such as perpetrators of ransomware, or even state actors engaged in espionage. In many instances, however, they may be persons of varying skill levels seeking to provide something useful in collaboration with others to develop quality software. Some of these individuals and groups succeed in developing useful code as software packages 108; others, despite good intentions, may develop software packages 108 with vulnerabilities or bugs.

In an example shown in FIG. 1, the package contributor 116a is a bad actor that has developed a "bad" software package 108a - "bad" in that it contributes to some security exploit. Package contributor 116b has developed a software package 108b of unknown status. This could be, for instance, a new software package by a new developer - not much may be known about it, and there may be little package metadata 118 to consider. Package contributor 116c is a good actor and has developed a "good" software package 108c. Such a package contributor 116c may be a well-known trustworthy actor, and the "good" software package 108c may have many positive reviews and high ratings. Additionally, FIG. 1 shows two code repositories, 114m and 114n. Any of the software packages 108a, 108b, and 108c may be stored by any of the code repositories 114m and 114n.

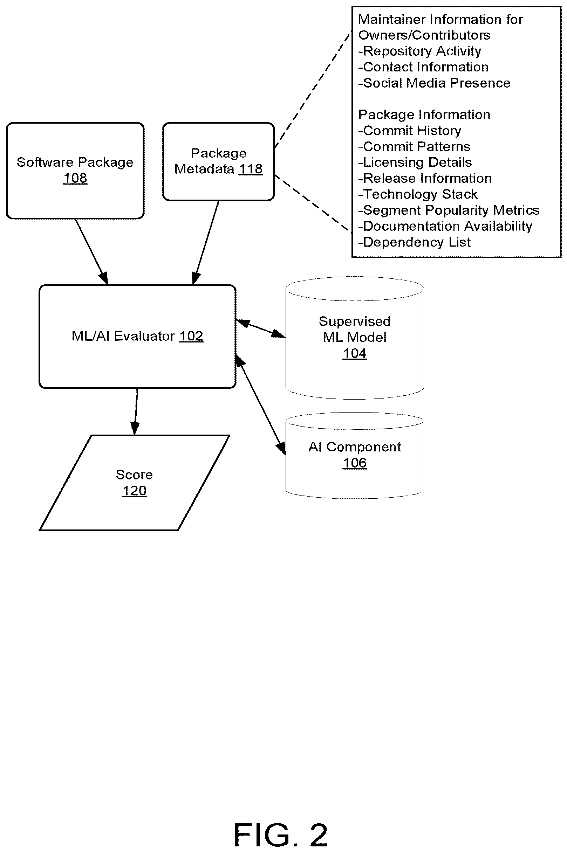

As described further herein, a software package 108 may be described by a range of package metadata 118. FIG. 2, for example, shows package metadata 118 associated that is used along with the supervised ML model 104 and AI component 106 to evaluate the software package 108. In FIG. 2, the package metadata includes maintainer information and package information. The maintainer information may describe package contributors 116 for the software package 108, such an owners, contributors, etc. Such maintainer information may include repository activity, contact information, and/or social media presence. The package information for the software package 108 may include commit history, commit patterns, licensing details, release information, technology stack, segment popularity metrics, documentation availability, and a dependency list. Such package metadata 118 may be retrieved from the code repository 114 associated with the software package 108, other third-party systems identified through the code repository 114 or through other mechanisms (e.g., AI-driven search, human-aided/driven search, etc.). As noted previously, the package metadata 118 may even be retrieved from the software package 108 (e.g., developer comments included in source code for the software package 108).

In some implementations, the package metadata 118 may include reputation information associated with a package contributor 116, a code repository 114 (or other source), or any person or entity associated with the software package 108. For instance, reputation information may include popularity (e.g., number of forks, starts, or watchers), contributor count (e.g., total number of unique contributors to a code repository 114), contributor quality (e.g., average number of pull requests merged per contributor, percentage of pull requests approved by maintainers, amount of work performed per contributor, estimated work, etc.), contributor location density (e.g., number of unique countries or organizations contributors belong to), threat intelligence (e.g., number of known security vulnerabilities reported by security databases (NVD, MITRE)), incident history/remediation (e.g., number of reported security incidents and average time to remediation), organization (e.g., employee count, origin, income, other products, etc.), time zone inference for contributors based on commit times, throw away email for a contributor extrapolated from a past data breach, percentage of "gollum" commits for each contributor, age of a contributor account, use by a contributor of a throw away email account, community health (e.g., deltas in commit histories (looking for account takeovers), maintenance status (yanked/abandoned), etc.), licensing (e.g., non-permissive licensing), or engineering risks (e.g., no or limited branch protections, insecure code repository action workflows, malicious code findings, etc.).

Package metadata 118 may also describe code quality as determined, e.g., by the AI component 106 when scanning the software package 108 for vulnerabilities. Examples of code quality information determined by an AI component 106 when scanning a software package 108 include open vulnerabilities (e.g., number of open security vulnerabilities), open issues time duration (e.g., average time to close open issues, estimated work based on open/active issues, etc.), time to remediate vulnerabilities (e.g., average time taken to remediate vulnerabilities), dependency management (e.g., number of outdated dependencies and their severity levels), code trust (e.g., percentage of code covered by tests, number of commits since the last security audit, coding best practices, hard-coded keys/tokens, security best practices, etc.), repo security (e.g., number of security-related configuration issues (e.g., open permissions, insecure .gitignore files)), CiCD best practices (e.g., percentage of builds with automated testing and automated deployment), or code scanning (e.g., number of detected security issues).

With some number of software packages 108 in the code base 110 and their associated package metadata 118, the evaluator 102 or other component may build/train the supervised ML model 104. The software packages 108 may be associated with third-party systems (e.g., code repositories 114) and may have been previously retrieved, reviewed, and accepted. Rejected samples will also be needed and may be retrieved from past software package reviews. The package metadata may have been retrieved previously or may be retrieved as part of the supervised ML model building process. Such retrieval may be similar to the metadata retrieval described further herein.

In some examples, either a human analyst or an AI component (e.g., AI component 106) may label and score the software packages 108 and metadata 118 to generate training data. These labeled/scored samples may then be fed into a training algorithm to build the supervised ML model 104. The AI component may also scan the software packages 108 for vulnerabilities and use the results as further training data. The resulting supervised ML model 104 may then be used by the evaluator 102 in evaluating software packages 108 and in calculating scores for those software packages 108.

As noted further herein, developers associated with the code base 110 may add modules, components, functions, updates, etc. on an ongoing basis. These additions may include a software package 108. Based on hooks or monitoring components, these additions may be detected and alerted to the evaluator 102, a related component and/or a human analyst. Alternatively or additionally, the code base 110 may be scanned on a periodic or event-driven basis - e.g., once a day - to detect any new software packages 108.

In various implementations, the evaluator 102 or a related component may then retrieve metadata 118 for the new software packages 108 from, e.g., the code repositories or other sources. Examples of the package metadata 118 that may be retrieved are discussed further herein in detail. In some examples, the retrieval process may be fully automated; in other instances, it may be human-aided or human-reviewed. AI components (e.g., the AI component 106) may also aid in the retrieval of package metadata 118.

In some implementations, the software packages 108 and their associated metadata 118 may then be processed by the AI component 106. In some examples, the AI component 106 may be a generative AI instance leveraging a large language model (LLM). In some instances, the LLM may be at least partially particular to the entity associated with the network 112. The AI component 106 may scan the software packages 108 for vulnerabilities and/or provide an overall evaluation of the code quality of each software package 108. In some further examples, the AI component may also label software packages 108 to improve the evaluation performed using the supervised ML model 104. In some implementations, this labeling by the AI component 106 may be specific to a category - e.g., maintainer reputation or code quality or may include labels for a range of categories.

In various implementations, after processing of a software package 108 by the AI component 106, the evaluator 102 may evaluate that software package 108 and its package metadata 118 using the supervised ML model 104. The supervised ML model 104 may take the software package 108, package metadata 118, and results of the AI component 106 as inputs and output at least one score 120 for the software package 108. In some examples, the score 120 may be multiple scores 120, each score 120 for one of multiple categories (e.g., reputation of code repository, code quality, etc.). Alternatively, a single score 120 may be used, and the decision for further processing may be based on that single score 120. As noted herein, the score 120 may indicate a code base inclusion status for the software package 108.

In some implementations, the score 120 may exceed a first threshold, resulting in the allowing 122 of the software package 108 to remain in the code base 110. In other examples, the score 120 may fall below a second threshold, resulting in rejection 124 of the software package 108 from the code base 110. When the score 120 is between the first threshold and second threshold, the software package 108 may be sent to a human analyst for further analysis 126. Each of allowing 122, rejection 124, and further analysis 126 may be an example of a code base inclusion status.

In some examples, the evaluator 102 may be associated with a user interface (UI) that enables a developer to submit a software package 108 through the UI for scoring by the evaluator 102 using the supervised ML model 104 and AI component 106. When a score 120 is calculated, it is shared back with the developer through the UI.

In various implementations, the results of the evaluator 102, such as the score 120, and any result of further analysis 126 may be used to update the supervised ML model 104. For example, if the further analysis 126 resulted in rejection 124 of the software package 108, the supervised ML model 104 might assign a lower score to similar software packages 108 in the future.

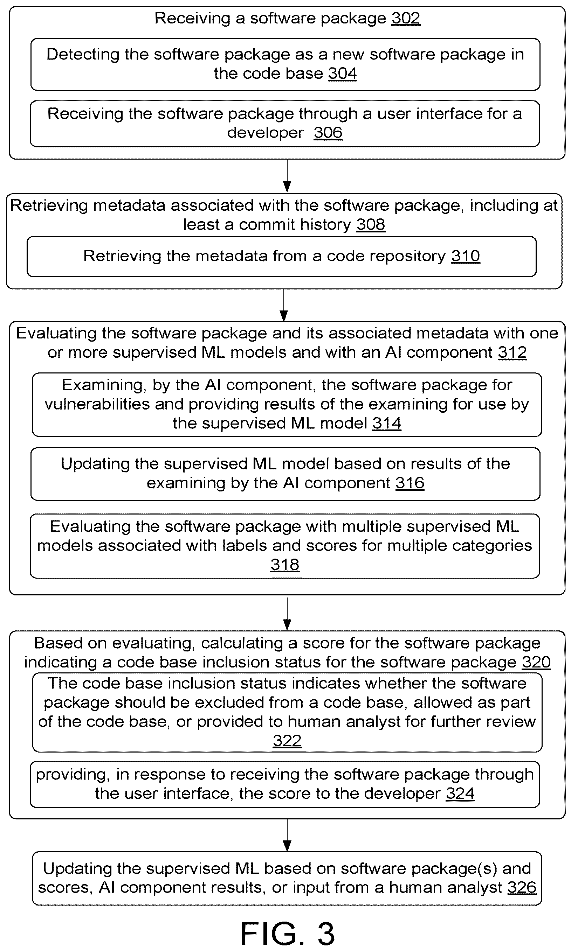

FIGs. 3-4 illustrate example processes. These processes are illustrated as logical flow graphs, each operation of which represents a sequence of operations that can be implemented in hardware, software, or a combination thereof. In the context of software, the operations represent computer-executable instructions stored on one or more computer-readable storage media that, when executed by one or more processors, perform the recited operations. Generally, computer-executable instructions include routines, programs, objects, components, data structures, and the like that perform particular functions or implement particular abstract data types. The order in which the operations are described is not intended to be construed as a limitation, and any number of the described operations can be omitted or combined in any order and/or in parallel to implement the processes.

FIG. 3 shows a flowchart of an example process for evaluating a software package using a supervised ML model and an AI component. The example process shown in FIG. 3 may be performed by components and devices such as those shown and described with respect to FIGs. 1 and 2 and/or the computing device 500 shown and described with respect to FIG. 5.

At 302, one or more computing devices may receive a software package. At 304, the receiving may comprise detecting the software package as a new software package in the code base. At 306, the receiving may comprise receiving the software package through a user interface for a developer.

At 308, the one or more computing devices may retrieve metadata associated with the software package, including at least a commit history. At 310, the retrieving may comprise retrieving the metadata from a code repository. In some implementations, the metadata may include maintainer information, which may include at least one of repository activity, contact information, or a social media presence of owners or contributors to the software package. In further implementations, the metadata may include package information, which may include at least one of commit patterns, licensing details, release information, a technology stack, segment popularity metrics, documentation availability, or a dependency list.

At 312, the one or more computing devices may evaluate the software package and its associated metadata with one or more supervised ML models and an AI component. In some examples, the AI component may be a generative AI component. At 314, the evaluating may comprise examining, by the AI component, the software package for vulnerabilities and providing results of the examining for use by the supervised ML model. At 316, the one or more computing devices may further update the supervised ML model based on results of the examining by the AI component. At 318, the evaluating may comprise evaluating the software package with multiple supervised ML models associated with labels and scores for multiple categories.

At 320, based on the evaluating, the one or more computing devices may calculate a score for the software package indicating a code base inclusion status for the software package. At 322, the code base inclusion status may indicate whether the software package should be excluded from a code base, allowed as part of the code base, or provided to human analyst for further review. At 324, e.g., when receiving the software package through the user interface from a developer, the one or more computing devices may provide the score to the developer.

At 326, the one or more computing devices may update the supervised ML based on software package(s) and scores, AI component results, or input from a human analyst.

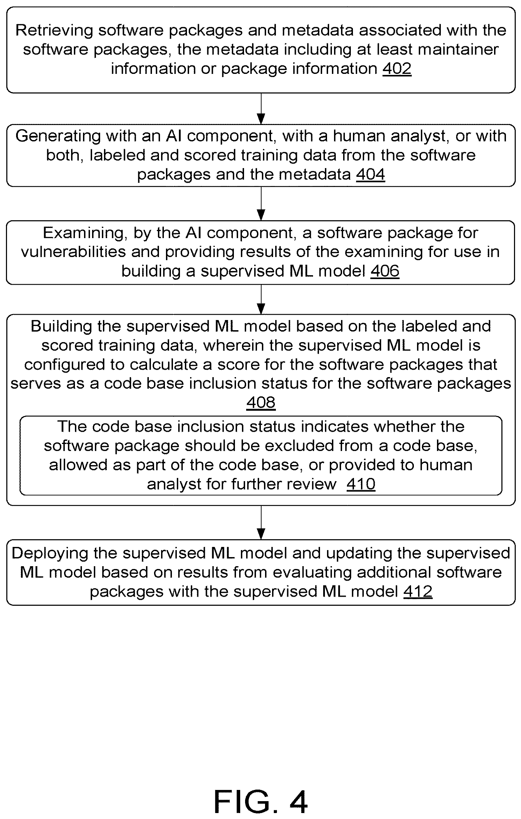

FIG. 4 shows a flowchart of an example process for training a supervised ML model for use in evaluating software packages in conjunction with an AI component. The example process shown in FIG. 4 may be performed by components and devices such as those shown and described with respect to FIGs. 1 and 2 and/or the computing device 500 shown and described with respect to FIG. 5.

At 402, one or more computing devices retrieve software packages and metadata associated with the software packages. The metadata may include at least maintainer information and package information. The maintainer information may include at least one of repository activity, contact information, or a social media presence of owners or contributors to the software package. The package information may include at least one of a commit history, commit patterns, licensing details, release information, a technology stack, segment popularity metrics, documentation availability, or a dependency list.

At 404, the one or more computing devices may generate, with an AI component, a human analyst, or both, labeled and scored training data from the software packages and the metadata. In some examples, the AI component may be a generative AI component.

At 406, the one or more computing devices may examine, using the AI component, a software package for vulnerabilities and providing results of the examining for use in building the supervised ML model.

At 408, the one or more computing devices may build a supervised ML model based on the labeled and scored training data. The supervised ML model may be configured to calculate a score for the software packages that serves as a code base inclusion status for the software packages. At 410, the code base inclusion status indicates whether the software packages should be excluded from a code base, allowed as part of the code base, or provided to human analyst for further review

At 412, the one or more computing devices may deploy the supervised ML model and update the supervised ML model based on results from evaluating additional software packages with the supervised ML model.

FIG. 5 shows an example system architecture for a computing device 500 that uses a supervised ML mode and AI component to evaluate a software package. The computing device 500 may include one or more computers, servers, mobile computing devices, or other types of computing devices that may execute one or more elements described herein. Additionally or alternatively, the computing device 500 may include virtual machine(s) operating on physical computing device(s), with the components and functionality of the computing device 500 distributed among one or more virtual machines, one or more physical computing devices, or a combination of both. In some examples, the 112 may include one or more computing devices that have the system architecture shown in FIG. 5, or a similar system architecture.

The computing device 500 may include memory 502. In various examples, the memory 502 may include system memory, which may be volatile (such as RAM), non-volatile (such as ROM, flash memory, non-volatile memory express (NVMe), etc.) or some combination of the two. The memory 502 may further include non-transitory computer storage media, such as volatile and nonvolatile, removable and non-removable media implemented in any method or technology for storage of information, such as computer readable instructions, data structures, program modules, or other data. System memory, removable storage, and non-removable storage are all examples of non-transitory computer storage media. Examples of non-transitory computer storage media include, but are not limited to, RAM, ROM, EEPROM, flash memory or other memory technology, CD-ROM, digital versatile discs (DVD) or other optical storage, magnetic cassettes, magnetic tape, magnetic disk storage or other magnetic storage devices, or any other non-transitory medium which may be used to store desired information and which may be accessed by the computing device 500. Any such non-transitory computer storage media may be part of the computing device 500.

The memory 502 can include one or more software or firmware elements, such as computer-readable instructions that are executable by one or more processors. For example, the memory 502 can store computer-executable instructions associated with modules and data 504. The modules and data 504 can include a platform, operating system, applications, and data utilized by the platform, operating system, and applications. Further, the modules and data 504 can implement any of the functionality for the devices and components described and illustrated herein.

The computing device 500 may also have one or more processors 506. In various examples, each of the processors 506 may be a central processing unit (CPU), a graphics processing unit (GPU), both a CPU and a GPU, or any other type of processing unit. Each of the one or more processors 506 may have numerous arithmetic logic units (ALUs) that perform arithmetic and logical operations, as well as one or more control units (CUs) that extract instructions and stored content from processor cache memory, and then executes these instructions by calling on the ALUs, as necessary, during program execution. The processors 506 may also be responsible for executing computer applications stored in the memory 502, which may be associated with types of volatile and/or nonvolatile memory. For example, the processors 506 may access data and computer-executable instructions stored in the memory 502 and execute such computer-executable instructions.

The computing device 500 may also have one or more transceivers 508. The transceivers 508 may include modems, interfaces, antennas, telephone connections, and/or other components that may transmit and/or receive data over networks, telephone lines, or other connections, or that may transfer data to or from removable storage media or other elements connected to the transceivers 508. For example, the transceivers 508 may include one or more network cards or other network interfaces that may be used to send data to the network 112 or receive data from the network 112.

In some examples, the computing device 500 may also have one or more input/output devices 510, such as a keyboard, a mouse, a touch-sensitive display, voice input device, a display, speakers, a printer, etc. These devices are well known in the art and need not be discussed at length here.

Although the subject matter has been described in language specific to structural features and/or methodological acts, it is to be understood that the subject matter is not necessarily limited to the specific features or acts described above. Rather, the specific features and acts described above are disclosed as example embodiments.

## Claims

1. A method comprising:
receiving, by one or more computing devices, a software package;
retrieving, by the one or more computing devices, metadata associated with the software package, the metadata including a commit history for the software package;
evaluating, by the one or more computing devices, the software package and its associated metadata with one or more supervised machine learning (ML) models and an artificial intelligence (AI) component; and
based on the evaluating, calculating, by the one or more computing devices, a score for the software package, the score indicating a code base inclusion status for the software package.

2. The method of claim 1, wherein the retrieving comprises retrieving the metadata from a code repository.

3. The method of claim 1 or 2, wherein the metadata further includes:
maintainer information, including at least one of repository activity, contact information, or a social media presence of owners or contributors to the software package; and
package information, including at least one of commit patterns, licensing details, release information, a technology stack, segment popularity metrics, documentation availability, or a dependency list.

4. The method of any preceding claim, wherein the evaluating comprises:
examining, by the AI component, the software package for vulnerabilities and providing results of the examining for use by the supervised ML model., optionally further comprising updating the supervised ML model based on results of the examining by the AI component;
or
evaluating the software package with multiple supervised ML models associated with labels and scores for multiple categories.

5. The method of any preceding claim, wherein the receiving comprises detecting the software package as a new software package in a code base.

6. The method of any preceding claim, wherein the receiving comprises receiving the software package through a user interface for a developer and providing, in response to receiving the software package through the user interface, the score to the developer.

7. The method of any preceding claim, further comprising updating the supervised ML based on software package(s) and scores, AI component results, or input from a human analyst.

8. The method of any preceding claim, wherein the code base inclusion status indicates whether the software package should be excluded from a code base, allowed as part of the code base, or provided to human analyst for further review.

9. A computer program that, when executed by one or more processors, cause device(s) including the one or more processors to perform operations comprising:
retrieving software packages associated with metadata , the metadata including at least maintainer information and package information;
generating, with an artificial intelligence (AI) component, a human analyst, or both, labeled and scored training data from the software packages and the metadata; and
building a supervised machine learning (ML) model based on the labeled and scored training data, wherein the supervised ML model is configured to calculate a score for the software packages that serves as a code base inclusion status for the software packages.

10. The computer program of claim 9, wherein:
the maintainer information includes at least one of repository activity, contact information, or a social media presence of owners or contributors to the software package; and
the package information includes at least one of a commit history, commit patterns, licensing details, release information, a technology stack, segment popularity metrics, documentation availability, or a dependency list.

11. The computer program of claim 9 or 10, wherein the operations further comprise examining, by the AI component, a software package for vulnerabilities and providing results of the examining for use in building the supervised ML model.

12. The computer program of any one of claims 9 to 11, wherein the operations further comprise deploying the supervised ML model and updating the supervised ML model based on results from evaluating additional software packages with the supervised ML model.

13. The computer program of any one of claims 9 to 12, wherein the code base inclusion status indicates whether the software packages should be excluded from a code base, allowed as part of the code base, or provided to human analyst for further review.

14. A system comprising:
one or more processors; and
programming instructions that, when executed by the one or more processors, cause the system to perform the method of any one of claims 1 to 8.
